Europäisches Patentamt

European Patent Office

Office européen des brevets

(11) Publication number: **0 113 716**
**B1**

(12) **EUROPEAN PATENT SPECIFICATION**

(45) Date of publication of patent specification: **26.11.86**

(51) Int. Cl.⁴: **B 62 D 33/06**

(21) Application number: **82902593.1**

(22) Date of filing: **21.07.82**

(86) International application number:
**PCT/US82/00983**

(87) International publication number:
**WO 84/00525 16.02.84 Gazette 84/05**

(54) VEHICLE SEAT WITH OFFSET SWIVEL.

(43) Date of publication of application:
**25.07.84 Bulletin 84/30**

(45) Publication of the grant of the patent:
**26.11.86 Bulletin 86/48**

(84) Designated Contracting States:
**DE FR GB**

(56) References cited:
**US-A-2 777 531**
**US-A-3 191 400**
**US-A-3 893 728**
**US-A-4 097 085**
**US-A-4 241 893**

**No further relevant documents**

(73) Proprietor: **J. I. Case Company**
**700 State Street**
**Racine, WI 53404 (US)**

(72) Inventor: **AMBERG, Arthur, A.**
**408 East Heidelberg Lane**
**Claremont, CA 91711 (US)**
Inventor: **PEDERSON, Earl, K.**
**2022 Briarcliffe**
**Wheaton, IL 60187 (US)**

(74) Representative: **Geldard, David Guthrie et al**
**URQUHART-DYKES AND LORD**
**5th Floor, Tower House, Merrion Way**
**Leeds, LS2 8PB West Yorkshire (GB)**

Courier Press, Leamington Spa, England.

## Description

This invention relates to a motor vehicle seat, and more particularly to a swivel seat for agricultural tractors or the like.

The prior art is replete with various arrangements for motor vehicle seats. One type of vehicle seat which is in use at present has a pivot mounting disposed in the middle of the seat and on the longitudinal axis of the vehicle. This allows equiangular rotation of the seat in both directions. Such a seat arrangement requires sufficient clearances between the seat and either the surrounding back and side walls of the vehicle cab, or the fender walls or consoles of the vehicle cab. This becomes a design problem, as vehicle width may be limited by narrow tire treads and a rear mounted fuel tank or hitch may restrict the area behind the seat.

US—A—3893728 disclose a vehicle having a seat that is pivotally mounted at the middle of the seat on a support arm that can swing relative to the vehicle to turn the seat from a forward-facing position facing steering control means to a rearward-facing position facing a control console while simultaneously moving the seat pivot rearwardly. Again, significant space must surround the seat for this arrangement to be effective.

The present invention may have a particular application for farm tractors, where an operator frequently has to look over his shoulder to observe and control performance of equipment pulled behind the vehicle. This usually involves an uncomfortable twisting of the upper body, causing discomfort and possible medical complications as well as impairing the ability to see the farm field on the side and behind the tractor. The invention seeks to alleviate this problem.

According to the present invention we provide a motor vehicle having a vehicle seat, steering control means positioned ahead of the seat, a control console separate from the steering control means, a seat support secured to the vehicle, and means mounting the seat on the support for pivotal movement about a substantially vertical axis, characterised in that the control console is positioned to one side of the vehicle seat and the mounting means is such that the vertical pivot axis is off-set from the centre of the seat and lies closer to the front edge than to the rear edge of the seat and closer to that side of the seat which is adjacent to the control console than to the side of the seat remote from the control console.

The pivot mounting permits the operator to turn toward the console, and to change his side and rear visibility angle parameters, without requiring large clearances around the seat.

An embodiment of a vehicle in accordance with the invention will now be described in more detail, by way of example only, with reference to the accompanying drawing, in which:—

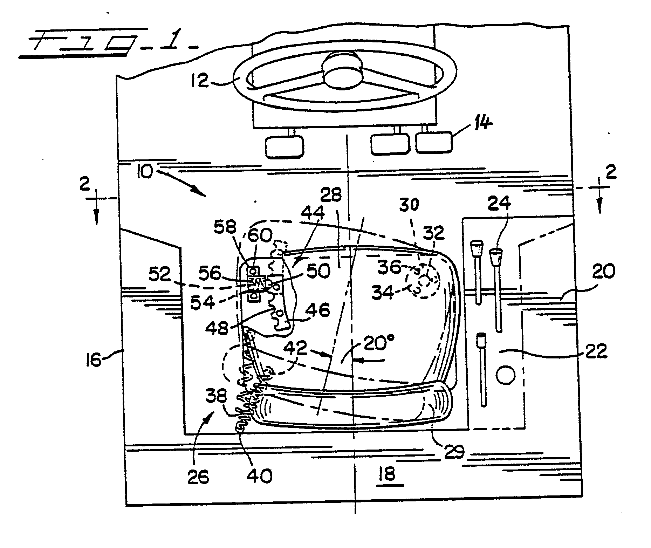

Figure 1 is a top view of a motor vehicle seat arrangement.

Referring now to the drawings, these show the cab 10 of a motor vehicle, such as an agricultural tractor or the like. A steering wheel 12 is disposed on the longitudinal axis of the tractor and pedals 14 for functional operations of the vehicle are disposed underneath the steering wheel 12. The cab 10 comprises a side wall 16, back wall 18 and another side wall 20 which has a control console 22 mounted thereon. A plurality of controls 24 for various operations of the tractor and its implements are located on the control console 22. The side walls 16 and 20 together with the back wall 18 form a three wall confinement area 26 wherein an operator's seat is disposed. The operator's seat 28, with a back support 29, is joined at 30 about a substantially vertical pivot axis to a support post 32 attached to the cab floor, or seat suspension system, by a mount flange 34 and bolts 36.

The seat may pivot from its forward-facing position about the pivot 30, but is biased by a pull-back spring 38 to return to the forward-facing position. The spring 38 is attached to the back wall 18 by a hook 40 extending outwardly therefrom, and by a seat hook 42 extending downwardly from the seat 28. A spring-loaded retention mechanism 44 facilitates retention of the seat 28 in any selected one of a plurality of positions to which the seat may pivot. The retention mechanism 44 comprises a plate 46 attached to the seat 28, which plate has recesses 48 forming an undulated or serrated surface on one side thereof. A ball 50 is urged by a spring 52, housed in a sleeve 54, to move into one of these recesses 48. The ball 50 is forced out of the detent recesses by virtue of the operator's efforts to move in or out of the particular position. The sleeve 54 is mounted on a post 56 attached to the floor of the cab by its base plate 58 and bolts 60.

In the example shown the control console is on the right hand side wall, and the construction allows the operator to swivel through approximately 20°, as illustrated in Figure 1, toward the control console 22 for easier access to the controls 24, and to afford less body twisting and contortions in order to look rearwardly. Alternatively, the seat could be moved in the same manner toward the left hand side wall, if the pivot axis is placed closer to that wall. The angle of rotation is also subject to changes. With a righthand console it is more convenient for the operator that the pivot, instead of being located on the seat center line is located on the front right hand corner of the seat cushion or slightly to the rear of the operator's right knee. As the seat pivots it does not encroach upon the control console or the back wall. The lack of controls on the left side wall 16 helps to accept the seat displacement without hindrance. Also, the psychological feeling of being disoriented from the brake pedals when the body is twisted for rearward observation is significantly diminished, and tactile contact with controls and pedals remains undisturbed. More command of a steering wheel with the left hand only is provided as the left shoulder is moved closer to the wheel. The movement of the seat towards the console will improve the operator's access to the controls on the console and, by changing the visibility angle parameters, will also give a better view of the field on the side of and behind the vehicle. This, in turn, will reduce an operator's body twisting and contortion caused by over-the-shoulder viewing of the implements attached to the vehicle and also the field behind the operator's seat. It must be understood that further improvements can be installed for better operation of the seat. For instance, fore-and-aft adjustment slide rails can be installed under the seat, thereby providing to-and-fro movement of the seat from the back wall. A release lever could be installed on the retention mechanism which would release seat locking by hand or foot. The disclosed ball detent retention mechanism does not require manual use, since it responds to the pressure applied thereto by a body movement. An assist pull-back spring also aids in swivelling about the pivot point by urging the seat to return to its original position.

The foregoing description and drawings merely illustrate the preferred embodiment and modifications and variations therein will be apparent to those skilled in the art.

## Claims

1. A motor vehicle having a vehicle seat (28), steering control means (12) positioned ahead of the seat, a control console (22) separate from the steering control means, a seat support (32) secured to the vehicle, and means (30) mounting the seat on the support for pivotal movement about a substantially vertical axis, characterised in that the control console is positioned to one side of the vehicle seat and the mounting means is such that the vertical pivot axis is off-set from the centre of the seat and lies closer to the front edge than the rear edge of the seat and closer to that side of the seat which is adjacent to the control console than to the side of the seat remote from the control console.

2. A motor vehicle according to claim 1, characterised in that a pull-back spring (38) is attached to the vehicle body and to the seat, the spring acting to bias the seat to a forward-facing position.

3. A motor vehicle according to claim 1 or claim 2, characterised by a spring-loaded retention mechanism (44) having one part thereof (54) rigidly secured to the vehicle body and engageable with another part (46) thereof secured to the seat, the mechanism allowing a plurality of adjustment positions for the seat.

4. A motor vehicle according to any one of the preceding claims characterised in that the seat is confined in an area defined between the steering contrtol means (12), a back wall (18) and two side walls (16, 20), the control console is mounted on one of the side walls, and the seat is free to pivot from a forward-facing position only towards that side wall (20) on which the control console is mounted.

5. A motor vehicle according to any one of the preceding claims characterised in that the angle through which the seat may pivot is limited to approximately 20°.

## Patentansprüche

1. Motorgetriebenes Fahrzeug mit einem Fahrersitz (28), einem Lenkrad (12) vorderhalb des Sitzes, einer Bedienungskonsole (22), welche von dem Lenkrad separat ist, einer Sitzhalterung (32), welche an dem Fahrzeug befestigt ist und Einrichtungen (30), welche den Sitz an der Halterung in der Art befestigen, daß dieser um eine im wesentlichen vertikale Achse schwenkbar ist, dadurch gekennzeichnet, daß die Steuerkonsole auf einer Seite des Fahrersitzes angeordnet ist und die Befestigungseinrichtungen derart ausgelegt sind, daß die vertikale Schwenkachse bezüglich der Mitte des Sitzes außermittig angeordnet ist und näher an dessen Vorderkante als an dessen Rückkante und näher an der der Steuerkonsole benachbarten Seite des Sitzes liegt als an der Seite des Sitzes, welche von der Steuerkonsole entfernt ist.

2. Motorgetriebenes Fahrzeug nach Anspruch 1, dadurch gekennzeichnet, daß eine Rückholfeder (38) zwischen dem Fahrzeuggehäuse und dem Sitz angeordnet ist, welche den Sitz in eine nach vorne gerichtete Stellung zwingt.

3. Motorgetriebenes Fahrzeug nach Anspruch 1 oder 2, dadurch gekennzeichnet, daß ein federbelastender Haltemechanismus (44) vorgesehen ist, von dem ein Teil (54) fest mit dem Fahrzeuggehäuse verbunden ist und mit einem anderen Teil (46) in Eingriff bringbar ist, welches an dem Sitz befestigt ist, so daß der Mechanismus eine Mehrzahl von Einstellungen für den Sitz ermöglicht.

4. Motorgetriebenes Fahrzeug nach einem der vorhergehenden Ansprüche, dadurch gekennzeichnet, daß der Sitz in einem Bereich angeordnet ist, der zwischen dem Lenkrad (12) einer Rückwand (18) und zwei Seitenwänden (16, 20) begrenzt ist, wobei die Steuerkonsole an einer der Seitenwände angeordnet ist und der Sitz aus einer nach vorne gerichteten Stellung nur in Richtung der Seitenwand (20) schwenkbar ist, an der die Steuerkonsole angeordnet ist.

5. Motorgetriebenes Fahrzeug nach einem der vorhergehenden Ansprüche, dadurch gekennzeichnet, daß der Winkel um welchen der Sitz schwenkbar ist auf annähernd 20° begrenzt ist.

## Revendications

1. Un véhicule à moteur, comportant un siège de véhicule (28), des moyens (12) de commande de direction placés en avant du siège, une console de commande (22) séparée des moyens de commande de direction, un support de siège (32) fixé au véhicule et des moyens (30) de montage du siège sur le support pour qu'il puisse pivoter autour d'un axe sensiblement vertical, caractérisé en ce que la console de commande est placée sur un côté du siège du véhicule et en ce que les moyens de montage sont tels que l'axe vertical de pivotement est décalé par rapport au centre du siège et s'étend plus près du bord avant que du bord arrière du siège, et plus près du côté du siège qui est adjacent à la console de commande que du côté du siège qui est éloigné par rapport à celle-ci.

2. Un véhicule à moteur selon la revendication 1, caractérisé en ce qu'un ressort de rappel (38) est attaché au châssis du véhicule et au siège, le ressort agissant pour rappeler le siège vers une position face à l'avant.

3. Un véhicule à moteur selon la revendication 1 ou la revendication 2, caractérisé par un mécanisme de retenue (44) à resort dont une partie (54) est assujettie fixement au bâti du véhicule et peut coopérer avec une autre partie (46) qui est assujettie au siège, le mécanisme permettant une pluralité de positions de réglage pour le siège.

4. Un véhicule à moteur selon l'une quelconque des revendications précédentes, caractérisé en ce que le siège est confiné dans une zone définie entre les moyens (12) de commande de direction, une paroi arrière (18) et deux parois latérales (16, 20), la console de commande étant montée sur l'une des parois latérales et le siège étant libre de pivoter, depuis une position face à l'avant, seulement vers la paroi latérale (20) sur laquelle est montée la console de commande.

5. Un véhicule à moteur selon l'une quelconque des revendications précédentes, caractérisé en ce que l'angle sur lequel le siège peut pivoter est limité à environ 20°.

FIG. 1